# EUROPEAN PATENT SPECIFICATION

(11) **EP 1 590 852 B1**
(45) Date of publication and mention of the grant of the patent: **06.09.2006**
(21) Application number: 04702754.5
(22) Date of filing: 16.01.2004
(51) Int. Cl.: H01M 10/40, H01M 4/02, H01M 4/04

(54) **SECONDARY CELL WITH POLYMER COATED ANODE**
SEKUNDÄRZELLE MIT POLYMERBESCHICHTER ANODE
PILE AUXILIAIRE DOTEE D'UNE ANODE REVETUE D'UN POLYMERE

(30) Priority: 07.02.2003 GB 0302834
(43) Date of publication of application: 02.11.2005
(73) Proprietor: ABSL Power Solutions Ltd, Abingdon Oxfordshire OX14 3ED (GB)
(72) Inventor: JARVIS, Christine, Ruth, Didcot, Oxon OX11 92L (GB)
(74) Representative: Talbot-Ponsonby, Clare Josephine
(86) International application number: PCT/GB2004/000208
(87) International publication number: WO 2004/070861

(56) References cited:
- EP-A- 1 011 160
- EP-A- 1 024 544
- WO-A-02/099920
- US-A- 4 981 672
- US-A- 5 342 710

## Description

This invention relates to a secondary cell in which the anode comprises a material which undergoes a structural change when it is charged and discharged for the first time, such as silicon or tin, and to a method of making such a cell.

For many years it has been known to make cells with lithium metal anodes, and cathodes of a material into which lithium ions can be intercalated or inserted. A wide variety of intercalation or insertion materials are known as cathode materials for rechargeable lithium cells, such as TiS₂ or V₆O₁₃. To avoid the problems arising from dendrite growth at lithium metal anodes during cycling it has been proposed to use an intercalation material such as carbon as the anode material. In this case the cathode material will be generally an intercalation material that initially contains lithium ions, such as LiₓCoO₂ where x is less than 1. Rechargeable cells of this type, in which both the anode and cathode contain intercalated lithium ions, are now available commercially, and may be referred to as lithium ion cells, or as swing or rocking-chair cells. Several different carbonaceous materials such as coke, graphite or carbon fibre have been suggested for use in anodes. Graphite is commonly used commercially, but the capacity of this material in commercial cells is close to the theoretical limit for LiC₆ (372 mA h/g). Alternative anode materials have therefore been suggested in order to increase electrode capacity, and in this respect tin and silicon electrodes have the benefit of a markedly higher theoretical capacity: 994 mA h/g for Li_{4.4}Sn and 4198 mA h/g for Li_{4.4}Si. However during insertion of lithium ions, very large volume changes occur, which lead to breakup of the electrode material and so poor cycle performance.

The present invention provides a process for making an anode for a secondary lithium cell comprising: electrochemically inserting lithium ions into an anode comprising a material which undergoes a structural change when charged and discharged for the first time, then electrochemically removing the lithium ions and subsequently applying a layer comprising polymeric material to the material which undergoes a structural change.

According to the present invention an anode for a secondary lithium cell is made by a process comprising: making an anode comprising a material which undergoes a structural change when charged and discharged for the first time; assembling a cell comprising the said anode, a cathode containing lithium ions, and an electrolyte containing lithium ions; passing an electric current through the cell so as to insert lithium ions into the material which undergoes a structural change and so charge the cell, and then discharging the cell; removing the anode from the cell and cleaning the surface of the material which undergoes a structural change; and coating the material which undergoes a structural change with a layer comprising a polymeric material.

A secondary lithium cell can then be made by assembling this coated anode with a suitable cathode and an electrolyte.

The material which undergoes a structural change when charged and discharged for the first time is preferably a group IV element, more preferably silicon or tin, most preferably tin. The material typically is in the form of a layer in the anode.

In a preferred embodiment, the process for making an anode for a secondary lithium cell comprises: electrochemically inserting lithium ions into an anode comprising a layer of tin, then electrochemically removing the lithium ions and subsequently applying a layer comprising polymeric material to the layer of tin.

In another preferred embodiment, the process for making an anode for a secondary lithium cell comprises: making an anode comprising a layer of tin; assembling a cell comprising the said anode, a cathode containing lithium ions, and an electrolyte containing lithium ions; passing an electric current through the cell so as to insert lithium ions into the tin and so charge the cell, and then discharging the cell; removing the anode from the cell and cleaning the surface of the tin; and coating the layer of tin with a layer comprising a polymeric material.

It will be appreciated that the polymeric material used for the coating must be compatible with the electrolyte to be used in the secondary cell, and must not prevent transfer of lithium ions to and from the material which undergoes a structural change. The polymeric material may therefore be of the type used in polymeric electrolytes. For example it may comprise PVdF (polyvinylidene fluoride) homopolymer, or a polyvinylidene fluoride copolymer, or a polyethylene oxide polymer. The polymeric material may be a microporous polymer, a plasticised polymer, a gel polymer, or a polymeric electrolyte. It may be applied by coating from a solution in a suitable casting solvent, or by lamination. Surprisingly such a coating has been found to suppress the deterioration in cell performance when the cell is subsequently cycled.

Preferably the coating step involves vacuum impregnation of the material which undergoes a structural change, to ensure the polymer penetrates into all cracks in the layer.

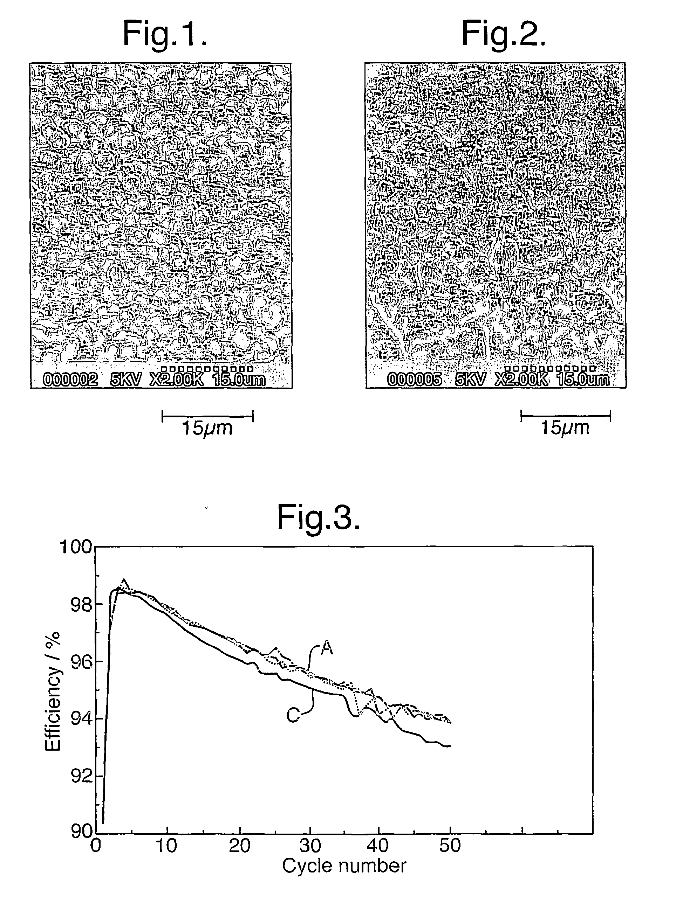

The invention will now be further and more particularly described, by way of example only, and with reference to the accompanying drawings in which:
Figures 1 and 2 show scanning electron micrographs of a tin electrode before and after the first cycle, respectively; and
Figure 3 shows graphically the variation of cell efficiency in successive cycles for different cells.
A tin anode has been made by electroplating tin onto a copper foil which had been acid treated. After electroplating, the electrodeposited tin anode was annealed. Figure 1 shows the surface of the tin. The anode was then assembled in a cell with a LiCoO₂ cathode and an electrolyte of ethylene carbonate and propylene carbonate (2:1 by volume) containing 1 M LiPF6. The cell was charged at 0.125 mA/cm² for 3.8 hours, and then was fully discharged. The cell was dismantled, and the tin electrode was rinsed with dimethyl carbonate, and allowed to dry. Figure 2 shows the surface of the tin at this stage. It will be appreciated that significant structural changes have occurred. In particular the tin has developed cracks. As an indication of the scale, the bar represents a distance of 15 µm.

### Example 1

A solution of homopolymer PVdF in dimethyl carbonate/ethylene carbonate was then prepared, by dissolving 1 g of PVdF in 3 g EC and 32 g DMC, this mixture being warmed to ensure dissolution. The cycled tin electrode was then immersed in the polymer solution, and the solution exposed to vacuum for a period of 10 seconds to ensure any gases would escape from the cracks in the surface of the tin, so that the polymer would penetrate into any such cracks. The electrode was then removed, air dried, and then vacuum dried at room temperature for 16 hours. Thus a polymer coated electrode is formed.

Test cells were then made, each cell being a 3-electrode test cell with a coated tin anode made as described above, a lithium metal reference electrode, and a cathode containing LiCoO₂. The electrolyte consisted of ethylene carbonate and propylene carbonate (2:1 by volume) containing 1 M LiPF₆. The electrodes were separated by a porous PVdF polymer separator and the cells were vacuum packaged in aluminium laminate packaging material.

The test cells were then cycled repeatedly between voltage limits of 0.01 V and 2.00 V, this being the voltage of the anode with respect to the lithium reference electrode, at a constant current of 0,125 mAcm⁻² Referring now to figure 3, the cycle efficiency of various cells made in this way are shown for successive cycles, marked A. By way of comparison the results are also shown for a comparative cell in which the anode was coated in exactly the same way but without having previously been cycled; this is marked C. The deterioration in cell efficiency over 50 charge and discharge cycles was from about 98.5% down to about 94.0% for the cells of the invention, and down to about 93.2% for the comparative cell.

It will be appreciated that the polymer coating may be different from that described in this example, and some other polymer coatings are described in subsequent

### examples.

### Example 2

A solution of vinylidene fluoride hexafluoropropylene copolymer with 6% hexafluoropropylene was prepared by dissolving 1 g of the copolymer in 3 g EC and 30 g DMC, this mixture being warmed to ensure dissolution; 0.4 g LiPF₆ was also dissolved in the mixture. As in Example 1, a cycled tin electrode was then immersed in the polymer solution, and the solution exposed to vacuum for a period of 10 seconds to ensure any gases would escape from the cracks in the surface of the tin, so that the polymer would penetrate into any such cracks. The electrode was then removed, air dried, and then vacuum dried at room temperature for 16 hours. Thus a polymer coated electrode is formed, the polymer coating containing PVdF/HFP copolymer, EC plasticiser and lithium salt.

Test cells were made exactly as in Example 1, and were cycled in the same way.

### Example 3

A solution containing PVdF homopolymer was prepared by dissolving 5 g of the polymer and also 0.36 g LiBF₄ in a mixture of 15 g ethylene carbonate and 30 g dimethyl carbonate. The solution was warmed to ensure dissolution. As in Example 1, a cycled tin electrode was dipped into the polymer solution, removed, and the excess solution allowed to drain away. The electrode was vacuum dried overnight. Thus a polymer coated electrode is formed, the polymer coating containing PVdF polymer, EC plasticiser and lithium salt.

Test cells were made in a similar way to those of Example 1, but in this case the electrolyte was ethylene carbonate/diethyl carbonate containing 1 M LiBF_{4.}

This same polymer solution was used to coat an uncycled tin electrode, but the polymer film did not adhere well.

### Example 4

A solution containing poly (ethylene oxide) was made by dissolving 2.7 g PEO and 0.8 g LiBF₄ in 47 g dimethyl carbonate and 14 g ethylene carbonate. As in the previous examples, a cycled tin electrode was dipped into the solution, removed, and the excess allowed to drain off. The electrode was vacuum dried overnight. In this case the polymer coating contains PEO polymer, EC plasticiser and lithium salt.

Test cells were made as in Example 3.

## Claims

1. A process for making an anode for a secondary lithium cell comprising: electrochemically inserting lithium ions into an anode comprising a material which undergoes a structural change when charged and discharged for the first time, then electrochemically removing the lithium ions and subsequently applying a layer comprising polymeric material to the material which undergoes a structural change.

2. A process as claimed in claim 1 comprising: making an anode comprising a material which undergoes a structural change when charged and discharged for the first time; assembling a cell comprising the said anode, a cathode containing lithium ions, and an electrolyte containing lithium ions; passing an electric current through the cell so as to insert lithium ions into the material which undergoes a structural change and so charge the cell, and then discharging the cell; removing the anode from the cell and cleaning the surface of the material which undergoes a structural change; and coating the material which undergoes a structural change with a layer comprising a polymeric material.

3. A process as claimed in claim 2 comprising contacting the surface of the material which undergoes a structural change with a solution containing polymeric material.

4. A process as claimed in claim 3 comprising exposing the material which undergoes a structural change, covered with a solution containing polymeric material, to a decreased pressure to assist in removing gas from surface cracks.

5. A process as claimed in any one of claims 2 to 4 wherein the layer of polymeric material also includes a lithium salt.

6. A process as claimed in any one of claims 2 to 5 wherein the polymeric material is a homopolymer or copolymer of vinylidene fluoride.

7. A process as claimed in any one of claims 1 to 6 wherein the material which undergoes a structural change is silicon or tin.

8. A process as claimed in claim 7 wherein the material which undergoes a structural change is tin.

9. A secondary lithium cell incorporating a coated anode made by a process as claimed in any one of the preceding claims.

10. An appliance incorporating a secondary lithium cell as claimed in claim 9.

## Patentansprüche

1. Verfahren zur Herstellung einer Anode für eine Sekundär-Lithiumzelle mit den Verfahrensschritten des elektrochemischen Einbringens von Lithiumionen in eine Anode aus einem Material, das sich einer strukturellen Änderung unterzieht, wenn es erstmals aufgeladen und entladen wird, dann des elektrochemischen Entfernens der Lithiumionen und anschließenden Aufbringens einer Schicht aus polymerem Material auf das Material, das sich einer strukturellen Änderung unterzieht.

2. Verfahren nach Anspruch 1 mit den Verfahrensschritten: Herstellung einer Anode aus einem Material, das sich einer strukturellen Änderung unterzieht, wenn es erstmals aufgeladen und entlanden wird; Zusammensetzung einer Zelle, die diese Anode und eine Lithiumionen enthaltende Kathode sowie ein Lithiumionen enthaltendes Elektrolyt aufweist; Hindurchleiten eines elektrischen Stromes durch die Zelle hindurch, um so Lithiumionen in das Material einzubringen, das sich einer strukturellen Änderung unterzieht, und so die Zelle aufzuladen, und dann Entladen der Zelle; Wegnahme der Anode von der Zelle und Reinigen der Oberfläche des Materials, welches sich einer strukturellen Änderung unterzieht; und Überziehen des einer strukturellen Änderung unterliegenden Materials mit einer ein polymeres Material aufweisenden Schicht.

3. Verfahren nach Anspruch 2, bei dem die Oberfläche des Materials, welches einer strukturellen Änderung unterliegt, mit einer polymeres Material enthaltenden Lösung in Kontakt gebracht wird.

4. Verfahren nach Anspruch 3, bei dem das einer strukturellen Änderung unerliegende, mit einer polymerisches Material enthaltenden Lösung überzogene Material einem verminderten Druck ausgesetzt wird, um ein Entfernen von Gas aus Oberflächenrissen zu unterstützen.

5. Verfahren nach jedem der Ansprüche 2 bis 4, bei dem die Schicht aus polymerem Material außerdem ein Lithiumsalz enthält.

6. Verfahren nach jedem der Ansprüche 2 bis 5, bei dem das polymere Material ein Homopolymer oder Kopolymer von Vinylidenfluorid ist.

7. Verfahren nach dem der Ansprüche 1 bis 6, bei dem das einer strukturellen Änderung unterliegende Material Silizium oder Zinn ist.

8. Verfahren nach Anspruch 7, bei dem das einer strukturellen Änderung unterliegende Material Zinn ist.

9. Sekundär-Lithiumzelle mit einer durch ein Verfahren nach jedem der vorangehenden Ansprüche hergestellten überzogenen Anode.

10. Apparatur mit einer Sekundär-Lithiumzelle nach Anspruch 9.

## Revendications

1. Procédé de fabrication d'une anode pour un accumulateur au lithium comprenant : l'insertion par voie électrochimique d'ions lithium dans une anode comprenant un matériau qui subit un changement structurel quand il est chargé et déchargé pour la première fois, puis l'élimination par voie électrochimique des ions lithium et l'application ultérieure d'une couche comprenant un matériau polymère sur le matériau qui subit un changement structurel.

2. Procédé selon la revendication 1 comprenant : la fabrication d'une anode comprenant un matériau qui subit un changement structurel quand il est chargé et déchargé pour la première fois ; l'assemblage d'une pile comprenant ladite anode, une cathode contenant des ions lithium, et un électrolyte contenant des ions lithium ; le passage d'un courant électrique à travers la pile afin d'insérer des ions lithium dans le matériau qui subit un changement structurel et ainsi charger la pile, puis la décharge de la pile ; le retrait de l'anode de la pile et le nettoyage de la surface du matériau qui subit un changement structurel ; et le revêtement du matériau qui subit un changement structurel avec une couche comprenant un matériau polymère.

3. Procédé selon la revendication 2 comprenant la mise en contact de la surface du matériau qui subit un changement structurel avec une solution contenant un matériau polymère.

4. Procédé selon la revendication 3 comprenant l'exposition du matériau qui subit un changement structurel, recouvert avec une solution contenant un matériau polymère, à une pression réduite pour aider à éliminer les gaz des craquelures de surface.

5. Procédé selon l'une quelconque des revendications 2 à 4, dans lequel la couche de matériau polymère comprend également un sel de lithium.

6. Procédé selon l'une quelconque des revendications 2 à 5, dans lequel le matériau polymère est un homopolymère ou un copolymère de fluorure de vinylidène.

7. Procédé selon l'une quelconque des revendications 1 à 6, dans lequel le matériau qui subit un changement structurel est le silicium ou l'étain.

8. Procédé selon la revendication 7, dans lequel le matériau qui subit un changement structurel est l'étain.

9. Accumulateur au lithium incorporant une anode revêtue fabriquée par l'intermédiaire d'un procédé selon l'une quelconque des revendications précédentes.

10. Appareil incorporant un accumulateur au lithium selon la revendication 9.
